# FASCICULE DE BREVET EUROPEEN

(11) **EP 2 634 024 B1**
(45) Date de publication et mention de la délivrance du brevet: **20.07.2016**
(21) Numéro de dépôt: 13350001.7
(22) Date de dépôt: 25.02.2013
(51) Int. Cl.: B60J 5/06

(54) **Porte latérale légère pour véhicule**
Leichte Seitentür für ein Fahrzeug
Light side door for a vehicle

(30) Priorité: 01.03.2012 FR 1200612
(43) Date de publication de la demande: 04.09.2013
(73) Titulaire: Mia Electric, 79143 Cerizay (FR)
(72) Inventeur: Rochard, Dominique, 49310 St. Hilaire du bois (FR)
(74) Mandataire: Katscher Habermann Patentanwälte

(56) Documents cités:
- EP-A1- 0 018 073
- EP-A2- 0 131 706
- WO-A1-96/33881

## Description

L'invention se rapporte à une porte latérale pour véhicule du type défini dans le préambule de la revendication 1. Une telle porte est connue de WO 96/33881 A.

Elle vise plus particulièrement mais non exclusivement les portes pour un véhicule électrique.

Un véhicule du type conduite intérieure comprend un châssis porteur d'une cabine destinée à protéger les occupants des conditions atmosphériques.

La cabine est délimitée par un pare-brise avant, un toit, une paroi arrière souvent vitrée et deux cotés latéraux dont au moins un des cotés présente une ouverture équipée d'une porte également vitrée.

Pour accéder au volume intérieur, une ouverture est donc aménagée dans la paroi latérale pour l'accès aux sièges notamment du conducteur. Cette ouverture latérale est généralement fermée par une porte.

Cette porte comprend une partie basse formée d'au moins une paroi rigide et une partie haute qui est transparente pour que le conducteur ou le passager puisse voir à l'extérieur ce qui est impératif pour le chauffeur. Cette partie transparente est généralement une vitre qui souvent peut s'escamoter dans la partie basse de la porte grâce à un mécanisme et des moyens de guidage logés dans la dite partie basse de la porte.

Il existe différents types de portes qui se distinguent les unes des autres par le mouvement d'ouverture et de fermeture.

La porte la plus couramment employée est celle articulée autour d'un axe vertical dit porte battante. C'est la plus utilisée. Souvent cette porte est articulée sur le bord avant de la dite porte mais il existe des portes articulées par le bord arrière.

La partie basse de ces portes connues est épaisse pour loger la vitre latérale, le mécanisme de manoeuvre de la vitre et le mécanisme d'ouverture fermeture de la porte.

On connait la porte coulissante qui nécessite un mouvement plus complexe lors de sa manoeuvre car il faut souvent précéder ou terminer le mouvement de translation par un changement de plan. Pour l'ouverture elle nécessite un mouvement perpendiculaire au plan de l'ouverture avant de la déplacer au long de la carrosserie. Selon le même principe que la porte battante, la vitre latérale peut se loger dans l'épaisseur de la partie basse de la porte.

Il existe une porte dite en aile de papillon qui est une porte à battant articulée sur le toit du véhicule. L'articulation est plus complexe car elle doit permettre de laisser la porte ouverte, donc levée, sans que le poids de celle-ci la ramène vers le bas.

On connait également une porte qui se range dans le plancher de la voiture, la vitre se rangeant dans l'épaisseur de la porte.

Elles sont toutes construites sur la base d'éléments rigides c'est à dire au moins une paroi externe formant une surface continue portée par une structure résistante.

Ces portes donnent accès aux sièges.

Dans un domaine proche mais différent qui est celui des véhicules de transport de marchandise, l'accès à la cabine se fait à l'aide de portes battantes classiques mais l'accès au volume de chargement se fait différemment.

On connait, pour les camions, les portes rideaux qui sont utilisées à l'arrière des camions au niveau de la zone de chargement et qui lors de l'ouverture se range au niveau du toit dudit véhicule. Il s'agit de lames horizontales rigides articulées qui s'enroulent sur un tube ou qui viennent se ranger dans des glissières présentées dans le volume de charge et souvent parallèles au toit.

Il existe également des bâches montées en rideaux pour les parois latérales du volume de chargement de certains camions. Ces rideaux sont suspendus à un rail et coulisse suivant un axe horizontal. Le bas de ces rideaux est équipé de lumières pour le passage d'un câble pour verrouiller le bas du rideau sur le châssis du camion.

Plus particulièrement mais non exclusivement, pour les véhicules à moteur électrique, le gain de poids est un atout important pour l'autonomie du véhicule et le poids des portes et des mécanismes associés est pris en considération pour l'exploitation du véhicule.

Cependant, beaucoup de constructeurs utilisent la porte comme moyen pour loger des renforts et limiter les déformations de la caisse lors d'un impact mais cela augmente le poids du véhicule et donc augmente la distance d'arrêt ainsi que l'énergie à dissiper lors d'un choc.

La vitesse de circulation des véhicules électriques ou des petits véhicules de loisirs étant généralement moins élevée que celle des grosses berlines, l'intérêt d'une porte plus résistante est moindre.

L'invention propose une nouvelle porte simple, peu couteuse, peu encombrante lorsqu'elle est rangée et légère.

A cet effet, l'invention a pour objet une porte latérale coulissante, pour contrôler l'accès aux sièges d'un véhicule, caractérisée en ce que la porte latérale coulissante comprend un flanc de matière souple associé à des éléments longilignes raidisseurs indépendants les uns des autres guidés à leurs extrémités sur des profilés, la dite porte étant déplaçable entre une position active où la porte ferme l'accès et une position dite rangée où la dite porte occupe un faible volume en se rangeant en accordéon par rapprochement des éléments longilignes.

L'invention sera bien comprise à l'aide de la description ci après faite à titre d'exemple non limitatif en regard du dessin qui représente
FIG 1 coupe transversale du véhicule avec la porte en cours d'ouverture

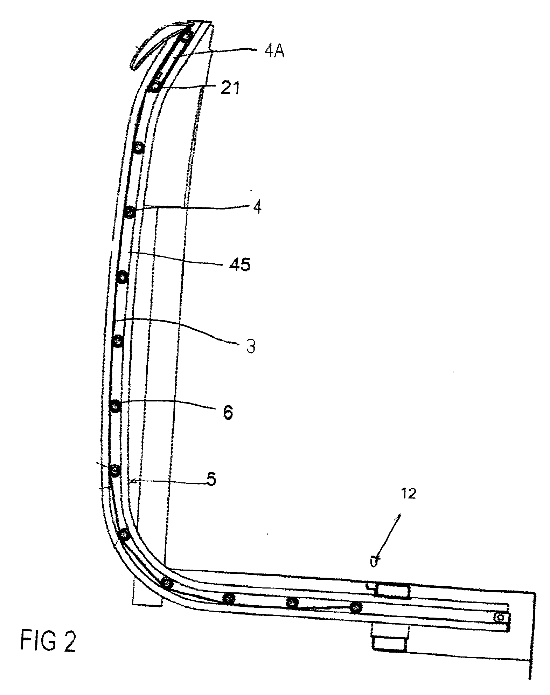

FIG 2 coupe transversale de la partie inférieure du véhicule

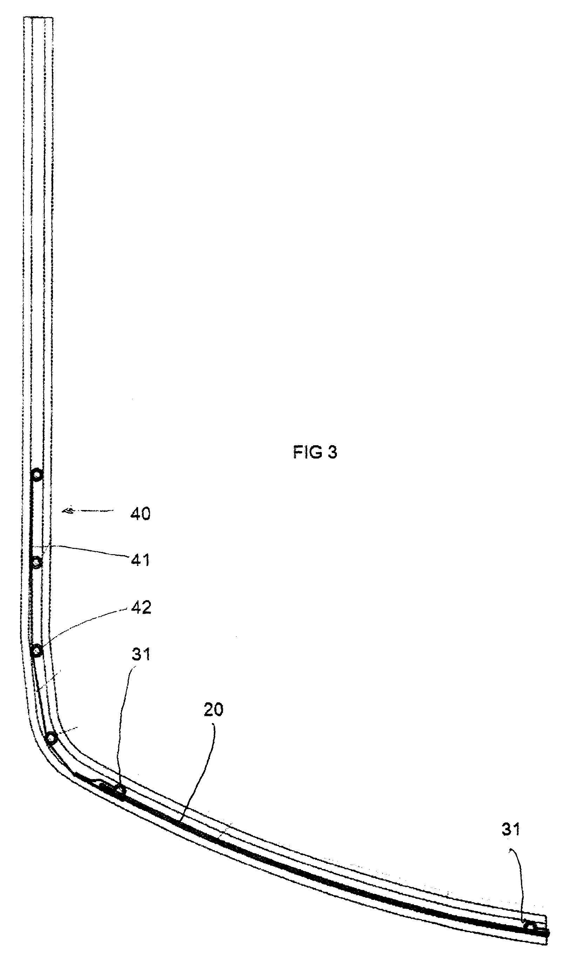

FIG 3 coupe transversale de la partie supérieure du véhicule
FIG 4 coupe horizontale de la porte
FIG 5 une variante de la porte.

En se reportant au dessin, on voit un véhicule 1 à quatre roues comprenant un habitacle accessible par au moins un porte 2 latérale donnant accès aux sièges.

Plus particulièrement mais non exclusivement ce véhicule est équipé d'une propulsion électrique.

Il est équipé d'un siège à l'avant en partie centrale et deux sièges à l'arrière.

Selon l'invention la porte latérale coulissante est constituée par un flanc de matière souple 3 associé à des éléments longilignes raidisseurs 4 indépendants les uns des autres guidés à leurs extrémités sur des profilés 5, la dite porte étant déplaçable entre une position active où la porte ferme l'accès et une position dite rangée où la dite porte occupe un faible volume en se rangeant en accordéon par rapprochement des éléments 4 longilignes.

Pour ce faire, on constitue donc une structure déformable composée d'éléments 4 longilignes indépendants les uns des autres présentant à chaque extrémité une pièce de guidage 6 qui coopère avec un profilé 5 de guidage fixé sur le véhicule et le flanc 3 souple est associé localement à chaque élément 4 longiligne pour constituer un ensemble qui se plie en accordéon ou se déplie pour apparaitre comme une voile tendue.

Le flanc 3 de matière souple a des propriétés de souplesse (formation d'ondes) dans au moins une direction à savoir celle correspondante au pliage en accordéon lors de la mise en accordéon qui sont similaires aux propriétés d'un tissu.

On utilisera de préférence comme flanc 3 souple un tissu.

Un traitement de ce tissu pourra le rendre imperméable. Par exemple, une enduction ou l'application d'un produit imperméabilisant conviennent.

Le flanc 3 est cousu au long de chaque élément 4 longiligne ou, de manière préférentielle, présente des passants ou des fourreaux 7 sur la face du tissu tournée vers l'intérieur du véhicule dans lesquels sont engagées des tiges formant baleines. Ces tiges peuvent être métalliques ou en matériau composite Ces fourreaux permettent d'y glisser les éléments longilignes comme des baleines. Le fourreau est engagé sur l'élément longiligne avec une légère friction pour éviter que le fourreau glisse involontairement sur l'élément longiligne. Le fourreau peut être obtenu en assemblant deux pièces de tissus l'une contre l'autre avec des lignes de couture définissant les fourreaux 7.

Ces éléments longilignes portent à chaque extrémité une pièce 6 de guidage qui coopère avec un profilé bordant l'ouverture dans la paroi latérale. Ici la pièce 6 coulisse dans une gorge 45.

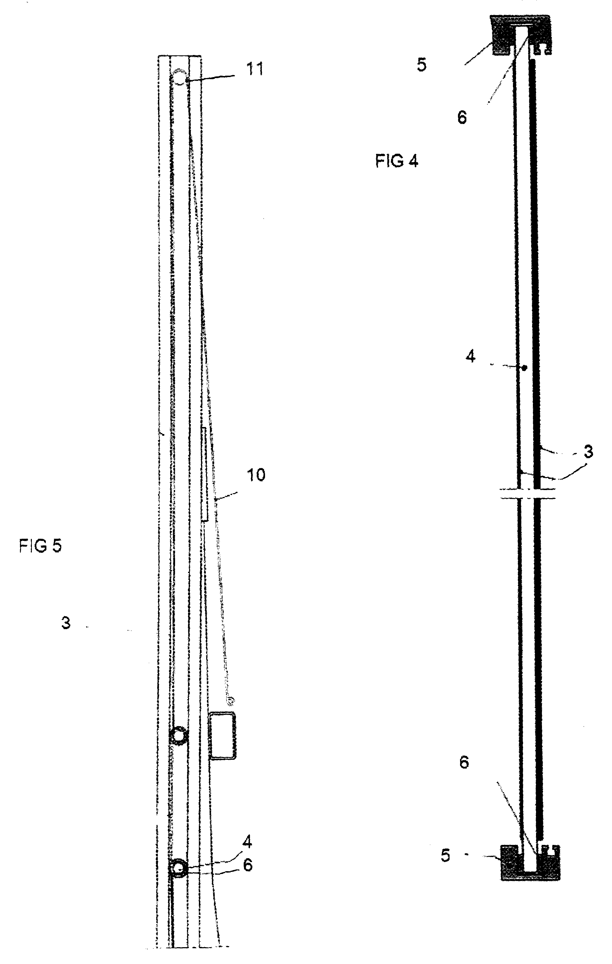

On notera (figure 4) sur le profilé 5 qui sert au guidage des éléments 4 longilignes la présence d'une deuxième gorge 50 qui est destinée à recevoir l'arrière d'un joint dont le bord actif viendra en appui sur le flanc souple pour obtenir une étanchéité.

En position fermée de la porte, le tissu doit apparaitre tendu.

Cela s'obtient soit par le dimensionnement ou en mettant en oeuvre, par exemple, un moyen 10 élastique de tension (figure 5).

Ce moyen 10 élastique de tension peut être incorporé dans le tissu (fils de chaine et/ou de trame selon l'axe d'élasticité choisi. Une autre solution consiste à relier le tissu à un point fixe du véhicule avec au moins un moyen élastique de tension.

Dans la représentation faite (figure 5), la tension est obtenue par au moins un élément 10 de tension tirant la porte dans le sens de l'ouverture en vue de tendre le flanc souple vers la position rangée. Cet élément de tension est, par exemple, fixé sur le dernier élément longiligne de la porte à savoir celui le plus proche de la zone où se range la porte.

On utilise par exemple deux élastiques identiques accrochés en deux points d'ancrage écartés l'un de l'autre. On notera que l'élastique circule sur une poulie 11 de renvoi située en bout du profilé de guidage pour repartir dans l'autre sens s'accrocher sur un point fixe ce qui permet à la porte de se déplacer jusqu'en fin de profilé.

Lorsque la porte est fermée, le tissu apparait alors tendu

Dans une forme préférée de l'invention, la porte se range dans un logement 12 aménagé sous le plancher. Cette porte étant peu encombrante elle va occuper un faible volume.

La porte est donc composée d'une structure porteuse constituée d'axes parallèles 4 disposés transversalement à l'axe de déplacement de la porte, les dits axes portant au deux extrémités des moyens 6 de guidage coopérant avec des rails de guidage, le flan de matière étant fixé sur chaque axe.

Un moyen de guidage simple est une bague 6 ou un rouleau 6 engagé sur l'extrémité de la tige formant baleine.

La porte est montée pour se déplacer du bas vers le haut pour la fermeture et inversement pour l'ouverture. L'amplitude de déplacement de la porte est limitée à sensiblement la moitié de l'ouverture, l'autre moitié étant obturée par un panneau 20 rigide mobile et transparent. Le mouvement de ce panneau transparent est indépendant de celui de la porte formée d'éléments longilignes et en position fermée, le bord supérieur de la porte est situé sensiblement à mi-hauteur de l'ouverture. La hauteur de la porte sera établie en fonction de la zone du toit occupée par le panneau rigide lorsqu'il est rangé. Il est préférable que la zone occupée soit au plus égale à la demi-largeur du véhicule.

Pour la manoeuvre de la porte, l'élément longiligne 4A dit terminal ayant fonction de bord supérieur de la porte est constitué par au moins une lame large Cette lame large 4A est pourvue à chaque extrémité de deux patins 21 de guidage écartés offrant ainsi une longueur de guidage supérieure à la longueur de guidage des moyens de guidage 6 utilisés sur les autres éléments 4 longilignes.

C'est cette lame large qui sert pour la manoeuvre de la porte que l'on tire vers le haut pour fermer la porte et que l'on pousse vers le bas pour l'ouvrir. Elle porte une poignée et un système de verrouillage. Elle a fonction de moyen de préhension.

Il est également possible de remplacer une autre des baleines 4 par une lame large ce qui donnerait plus de rigidité à la porte. Cette autre lame pourrait se situer à mi-hauteur de la porte.

On comprend bien que les axes de la structure déformable sont reliés entre eux uniquement par le flanc 3 de matière. Lorsqu'on range la porte les éléments longilignes se rapprochent les uns des autres et le tissu forme alors des ondes. Lorsque l'on ferme la porte on tire sur la lame large 4A qui progressivement va entrainer les éléments longilignes par l'intermédiaire du tissu qui se tend progressivement. Le bord opposé à la lame large 4A est soit fixe soit flottant car relié à un point fixe par le moyen élastique 10 évoqué plus haut.

La dimension transversale des éléments longilignes est réduite par rapport à la distance séparant deux éléments longilignes mesurée lorsque la porte est fermée et le tissu tendu. La conséquence est une mise en accordéon de la porte qui occupe alors moins de la moitié de sa hauteur ce qui permet de la ranger facilement dans un caisson sans aller au delà du plan M médian longitudinal vertical.

La porte se range en accordéon ce qui permet de limiter la dimension du logement qui va la contenir. En effet, plus l'écartement entre deux éléments longilignes est important moins la porte sera encombrante dans le sens du rangement. Il est entendu que les demi ondes formées auront une hauteur plus grande mais étant souples elles prennent moins de place. Le rapport entre le diamètre de la bague de guidage et la distance de deux éléments longilignes est de un sur quatre environ. La combinaison du guidage par une lame large en tête et les moyens élastiques de rappel vers la position de rangement participe à éviter le problème du tiroir coincé.

En position fermée, la porte occupe environ la moitié de la hauteur de l'accès aux sièges et cette porte est complétée par un panneau 20 rigide transparent indépendant de la porte qui est mobile en translation.

Ce panneau peut être mobile selon un axe parallèle au plan d'appui du véhicule mais il sera avantageusement mobile verticalement par rapport au plan d'appui conventionnel du véhicule. Ce panneau se range au niveau du toit.

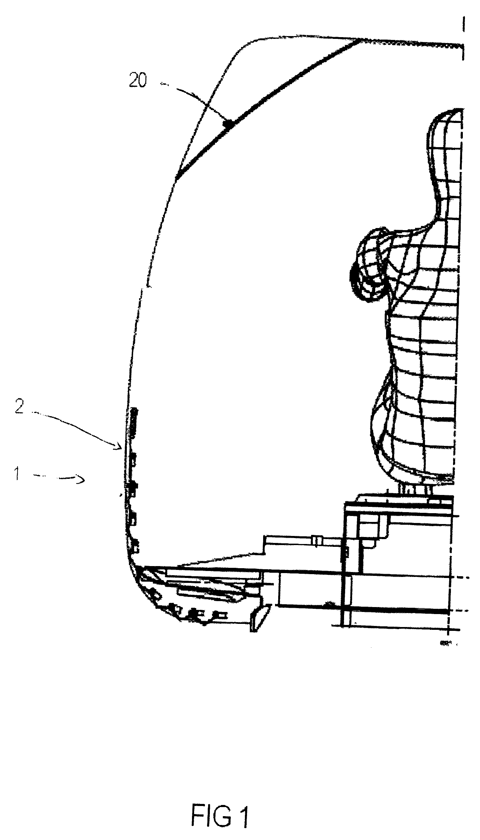

Ce panneau 20 rigide sera guidé uniquement aux quatre coins dans des rails ou profilés bordant l'ouverture. Le guidage se fait par des moyens 31 permettant d'ajouter à la translation une rotation et par exemple par des bagues 31 à section circulaire. En utilisant ce guidage aux quatre coins, les rails peuvent avoir une courbure prononcée sans gêner le déplacement du panneau. Ce panneau rigide se loge donc à l'intérieur du véhicule sous le toit. On voit en figure 1 le panneau 20 qui en cours de manoeuvre pénètre dans l'habitacle.

La longueur du panneau a été déterminée pour qu'en position rangée, le panneau occupe au plus la demi largeur du toit. Eventuellement, un rideau 40 associé au bord supérieur du panneau transparent vient occuper la place qu'occupe le panneau en position rangé lorsque l'on translate le panneau transparent vers le bas. Ce rideau sera constitué d'une toile 41 comportant transversalement des baleines 42 portant à chaque extrémité une bague de guidage. Lorsque l'on range le toit, le rideau se range en accordéon.

Un moyen élastique peut être utilisé pour tendre ce deuxième rideau de la même manière que la porte.

On a donc construit une porte très légère qui convient notamment à un véhicule électrique.

## Revendications

1. Porte latérale coulissante d'un véhicule, pour contrôler l'accès aux sièges du véhicule, **caractérisée en ce que** la porte latérale coulissante comprend un flanc (3) de matière souple associée à des éléments (4) longilignes raidisseurs indépendants les uns des autres et guidés à leurs extrémités sur des profilés (5), la dite porte étant déplaçable entre une position active où la porte obture l'accès et une position dite rangée où la dite porte occupe un faible volume en se rangeant en accordéon par rapprochement des éléments raidisseurs.

2. Porte latérale selon la revendication 1 **caractérisée en ce que** le flanc (3) de matière souple est un tissu.

3. Porte latérale selon la revendication 1 **caractérisée en ce que** les éléments (4) longilignes sont de simples axes pourvus en leurs extrémités d'un rouleau (6) de guidage engagé dans un profilé.

4. Porte latérale selon l'une quelconque des revendications 1 à 3 **caractérisée en ce que** la porte comprend une lame large (4A) formant moyen de préhension laquelle lame est guidée de chaque coté par des patins de guidage réalisant un large guidage.

5. Porte latérale selon l'une quelconque des revendications précédentes **caractérisée en ce qu'**un moyen (10) élastique tend le flanc souple lorsque la porte est en position fermée.

6. Porte latérale selon la revendication 5 **caractérisé en ce que** le moyen élastique est au moins un élastique reliant la porte à un point fixe du véhicule en position assemblée.

7. Porte latérale selon la revendication 6 **caractérisée en ce que** l'élastique est dévié par une poulie (11) de renvoi.

8. Porte latérale selon l'une quelconque des revendications précédentes caractérisée en ce la porte en position assemblée se déplace perpendiculairement au plan d'appui conventionnel d'un véhicule.

9. Véhicule équipé d'une porte latérale selon l'une quelconque des revendications 1 à 8 **caractérisé en ce que** la porte en position fermée occupe sensiblement la mi hauteur de l'ouverture donnant accès aux sièges l'autre partie de l'ouverture étant obturée par un panneau (20) transparent rigide

10. Véhicule équipé d'une porte latérale selon la revendication 9 **caractérisé en ce que** le panneau (20) transparent rigide se déplace de bas en haut pour l'ouverture.

11. Véhicule équipé d'une porte latérale selon la revendication 9 ou 10 **caractérisé en ce que** le panneau transparent rigide est guidé ponctuellement aux quatre coins.

12. Véhicule équipé d'une porte latérale selon la revendication 10 ou 11 **caractérisé en ce qu'**un rideau est associé au bord supérieur du panneau pour lors de la translation vers le bas du panneau (20) transparent venir occuper la place du panneau lorsqu'il était en position ouverte.

## Patentansprüche

1. Seitenschiebetür für ein Fahrzeug, zum Steuern des Zugangs zu Fahrzeugsitzen, **dadurch gekennzeichnet, dass** die Seitenschiebetür ein flexibles Seitenteil (3) aufweist, das mit den voneinander unabhängigen länglichen Versteifungs-Elementen (4), die an ihren Enden auf den Profilen (5) geführt sind, assoziiert ist, wobei die Tür verschiebbar ist zwischen einer aktiven Position, in der die Tür den Zugang verschließt, und einer sogenannten Ruheposition, in der die Tür ein geringeres Volumen einnimmt, indem sie bei Annäherung an die Versteifungselemente in Zickzackform gelagert wird.

2. Seitentür nach Anspruch 1, **dadurch gekennzeichnet, dass** das flexible Seitenteil (3) ein Textil ist.

3. Seitentür nach Anspruch 1, **dadurch gekennzeichnet, dass** die länglichen Elemente (4) einachsig sind, wobei die Achsen an ihren Enden mit einer Führungsrolle (6) versehen sind, die in ein Profil eingreift.

4. Seitentür nach einem der Ansprüche 1 bis 3, **dadurch gekennzeichnet, dass** die Tür ein große Platte (4A) aufweist, die einen Greifer bildet, wobei die Platte an jeder Seite von Gleitführungsschuhen geführt ist, die eine große Führung verwirklichen.

5. Seitentür nach einem der vorstehenden Ansprüche,
**dadurch gekennzeichnet, dass** das flexible Seitenteil von einem elastischen Mittel (10) gespannt wird, wenn sich die Tür in der geschlossenen Position befindet.

6. Seitentür nach Anspruch 5, **dadurch gekennzeichnet, dass** das elastische Mittel zumindest ein Gummi ist, der die Tür in montierter Position an einem festen Punkt des Fahrzeugs verbindet.

7. Seitentür nach Anspruch 6, **dadurch gekennzeichnet, dass** der Gummi von einer Umlenkrolle (11) umgelenkt wird.

8. Seitentür nach einem der vorstehenden Ansprüche,
**dadurch gekennzeichnet, dass** die Tür in montierter Position senkrecht zur herkömmlichen Fahrzeugtragebene verschoben wird.

9. Fahrzeug, ausgestattet mit einer Seitentür nach einem der Ansprüche 1 bis 8,
**dadurch gekennzeichnet, dass** die Tür in geschlossener Position etwa die halbe Öffnungshöhe einnimmt, die Zugang zu Sitzen der anderen Öffnungsseite gewährt, wobei die Sitze von einer steifen, durchsichtigen Platte (20) blockiert werden.

10. Fahrzeug, ausgestattet mit einer Seitentür nach Anspruch 9, **dadurch gekennzeichnet, dass** sich die steife, durchsichtige Platte (20) für das Öffnen von unten nach oben verlagert.

11. Fahrzeug, ausgestattet mit einer Seitentür nach Anspruch 9 oder 10, **dadurch gekennzeichnet, dass** die steife, durchsichtige Platte punktuell an den vier Ecken geführt ist.

12. Fahrzeug, ausgestattet mit einer Seitentür nach Anspruch 10 oder 11, **dadurch gekennzeichnet, dass** ein Vorhang mit dem oberen Rand der Platte verbunden ist, um bei der Verlagerung in Richtung des Bodens der durchsichtigen Platte (20) den Platz der durchsichtigen Platte einzunehmen, wenn sich diese in der geöffneten Position befindet.

## Claims

1. Sliding side door for a vehicle, for controlling access to vehicle seats, **characterized in that** the sliding side door comprises a flexible flank (3) associated with elongated stiffening elements (4) independent from one another and guided on profiles (5) at ends, wherein said door is displaceable between an active position, in which the door closes the access, and a so-called rest position, in which the door occupies less volume by being supported in a zigzag shape when approaching the stiffening elements.

2. Side door according to claim 1, **characterized in that** the flexible flank (3) is a fabric.

3. Side door according to claim 1, **characterized in that** the elongated elements (4) are simple axles, wherein the axles at ends are provided with a guide roller (6) engaging in a profile.

4. Side door according to one of claims 1 to 3, **characterized in that** the door comprises a large panel (4A), which forms a gripper, wherein the panel is guided by sliding guide shoes on each side, which realize a large guidance.

5. Side door according to one of the preceding claims, **characterized in that** the flexible flank is stretched by an elastic means (10), when the door is in the closed position.

6. Side door according to claim 5, **characterized in that** the elastic means is at least an elastic connecting the door in assembled position on a fixed point of the vehicle.

7. Side door according to claim 6, **characterized in that** the elastic is deflected by a deflection roller (11).

8. Side door according to one of the preceding claims, **characterized in that** in the assembled position, the door is displaced perpendicular to the conventional vehicle support plane.

9. Vehicle, equipped with a side door according to one of claims 1 to 8, **characterized in that** the door occupies roughly half of the opening height, granting access to seats of the other opening side, wherein the seats are blocked by a rigid, transparent plate (20).

10. Vehicle, equipped with a side door according to claim 9, **characterized in that** the rigid, transparent plate (20) is displaced bottom-up for the opening.

11. Vehicle, equipped with a side door according to claim 9 or 10, **characterized in that** the rigid, transparent plate is guided punctually on the four corners.

12. Vehicle, equipped with a side door according to claim 10 or 11, **characterized in that** a curtain is connected to the upper edge of the plate in order to occupy the place of the transparent plate during the displacement in the direction toward the bottom of the transparent plate (20), when the latter is in the open position.
